# EUROPÄISCHE PATENTSCHRIFT

(11) **EP 3 112 038 B1**
(45) Veröffentlichungstag und Bekanntmachung des Hinweises auf die Patenterteilung: **03.08.2022**
(21) Anmeldenummer: 16173101.3
(22) Anmeldetag: 06.06.2016
(51) Int. Cl.: B08B 9/02, B23K 1/20, B23K 26/70, B23K 101/06

(54) **VERFAHREN ZUM REINIGEN EINER INNENWAND EINES ROHRES MIT EINER REINIGUNGSVORRICHTUNG**
METHOD FOR CLEANING AN INSIDE WALL OF A TUBE WITH A CLEANING DEVICE
PROCÉDÉ DE NETTOYAGE D'UNE PAROI INTERNE D'UN TUBE AVEC UN DISPOSITIF DE NETTOYAGE

(30) Priorität: 29.06.2015 DE 102015110383
(43) Veröffentlichungstag der Anmeldung: 04.01.2017
(73) Patentinhaber: TRUMPF Werkzeugmaschinen GmbH + Co. KG, 71254 Ditzingen (DE)
(72) Erfinder: STEINHART, Siegfried, 72513 Hettingen (DE)
(74) Vertreter: Patentanwälte Mammel und Maser PartG mbB

(56) Entgegenhaltungen:
- EP-A1- 1 454 700
- EP-B1- 2 879 816
- US-A- 4 862 549
- US-A1- 2010 193 485

## Beschreibung

Die Erfindung betrifft ein Verfahren zum Reinigen einer Innenwand eines Rohres.

Aus der EP 1 454 700 A1, welche den Oberbegriff des Anspruchs 1 offenbart, ist eine Laserbearbeitungsmaschine, insbesondere eine Laserschneidanlage, bekannt, welche eine Spannvorrichtung zur Halterung eines zu bearbeitenden Rohres umfasst. Dieses Spannfutter ist drehbar von einem Maschinengrundgestell aufgenommen, um eine Außenumfangsfläche des Rohres mit einem Schneidstrahl, insbesondere Laserstrahl, zu bearbeiten. Hierfür wird dieser Laserstrahl mittels eines Bearbeitungskopfes der Laserschneidanlage zur Außenumfangsfläche des Rohres positioniert.

Innerhalb des Rohres ist eine Kühl- und/oder Spüllanze vorgesehen, welche zur Bearbeitungsstelle des Laserstrahls positioniert wird, so dass die während dem Laserschneiden entstehenden Schlacken und Dämpfe aufgenommen und abgesaugt werden können. Ebenso kann der durch die Rohrwandung hindurchtretende Laserstrahl in den Lanzenraum eintreten, so dass die Innenwand des Rohres nicht beeinträchtigt wird. Das Rohrinnere wird weitestgehend sauber gehalten, da die Schneidspritzer und Dämpfe über den Lanzeninnenraum abgeführt werden.

In vielen Anwendungsfällen ist es erforderlich, dass die Innenwand eines Rohres beziehungsweise rohrförmigen Werkstückes frei von Verschmutzung ist.

Zur Reinigung von solchen rohrförmigen Werkstücken ist bekannt, Reinigungsvorrichtungen gemäß der US 4,862,549 A einzusetzen. Hierbei handelt es sich um Rundbürsten, die manuell auf einen Endabschnitt eines rohrförmigen Werkstückes aufgesetzt werden, so dass eine innere Rundbürste in den Innenraum des Rohres eintritt und eine äußere Rundbürste an der Rohraußenumfangsfläche zur Reinigung angreift. Eine solche manuelle Nacharbeit ist aufwändig und kostenintensiv.

Aus der US 2010/0193485 A1 ist ein Verfahren zum Laserschneiden von Rohren zur Herstellung von medizinischen Vorrichtungen bekannt. Diese sind rohrförmig. Zum Herstellen der rohrförmigen Teile werden diese durch einen Servomotor um die Längsachse drehbar aufgenommen. Während dem Einbringen eines Schnittes mittels eines Lasers ist innerhalb dem rohrförmigen Teil ein Hondorn geführt und positioniert, so dass dieser Hondorn während der Bearbeitung sich zumindest unterhalb der Schnittstelle erstreckt. Gleichzeitig wird vom freien stirnseitigen Ende des rohrförmigen Teils ein Gas in das zu bearbeitende rohrförmige Teil eingeblasen, so dass die Bearbeitungsstelle zum einen gekühlt und zum anderen Verschmutzungen nicht in Richtung des freien Endes gelangen können. Durch den rotierend angetriebenen Hondorn wird an der Innenseite der Bearbeitungsstelle des rohrförmigen Teils entstehende Schlacke abgetragen. Hierfür weist der Hondorn eine Beschichtung aus abrasivem Material auf, um diese Innenbearbeitung durchzuführen.

Der Erfindung liegt die Aufgabe zugrunde, ein Verfahren zur Reinigung einer Innenwand eines Rohres vorzuschlagen, wodurch eine kostengünstige Reinigung von Verschmutzungen an der Innenwand des Rohres ermöglicht wird.

Diese Aufgabe wird durch ein Verfahren nach Anspruch 1 zum Reinigen einer Innenwand eines Rohres, welches von einer Spannvorrichtung einer Laserbearbeitungsmaschine aufgenommen und mit einem Laserstrahl bearbeitet wird, gelöst, bei dem vor einem letzten Trennschnitt zum vollständigen Abtrennen eines Rohrabschnitts von dem durch die Spannvorrichtung gehaltene Rohr ein Reinigungsschritt mit einer Reinigungsvorrichtung durchgeführt wird und zumindest die Innenwand des Rohres von einem freien Rohrende bis zum einzubringenden Trennschnitt zur Bildung eines Werkstückes gereinigt wird, wobei die Reinigungsvorrichtung mit Abstand zum Konturschnitt geführt wird, sodass ein Auftreffen des Laserstrahls auf der Reinigungsvorrichtung verhindert ist. Anschließend nach dem Reinigungsschnitt kann ein Trennschnitt zum Abtrennen eines Rohrabschnitts zur Bildung eines Werkstücks von dem Rohr durchgeführt werden. Dadurch wird der Reinigungsschritt in den Automatisierungsprozess zur Herstellung von Werkstücken aus einem Rohr oder rohrförmigen Material eingebunden und ermöglicht. Das durch die Spannvorrichtung bereits gehaltene Rohr kann in einfacher Weise durch Einführen der Reinigungsvorrichtung gereinigt und vom Schmutz an der Innenwand befreit werden. Dadurch werden eine sehr effiziente und kostengünstige Reinigung des Rohres erzielt. Dieses Verfahren ermöglicht somit, dass während oder nach dem letzten Konturschnitt, sofern ein solcher eingebracht wird, jedenfalls vor dem letzten Trennschnitt zum Abtrennen des Rohrabschnitts zur Bildung des Werkstücks von dem Rohr, ein Reinigungsschritt mit der Reinigungsvorrichtung im gespannten Zustand des Rohres durchgeführt wird.

Nach einem bevorzugten Verfahren der Erfindung wird während des Reinigungsschrittes das Rohr durch die Reinigungsvorrichtung im Bereich der Innenwand des Rohres gereinigt, der sich vom freien Rohrende aus zumindest geringfügig über den zu bildenden Trennschnitt hinaus in das Rohr erstreckt. Dadurch wird sichergestellt, dass die Rohrinnenwand bis zum Trennschnitt gereinigt wird.

Des Weiteren wird die Reinigungsvorrichtung nach dem Reinigungsschritt und vor dem Einbringen des letzten Trennschnitts zumindest aus dem Bereich des Trennschnitts oder vollständig aus dem Rohr herausgeführt. Dadurch kann nach dem Einbringen des Trennschnitts das gebildete Werkstück über eine Handhabungseinrichtung oder eine Ausschleusschräge in einfacher Weise ausgeschleust werden. Des Weiteren werden zum Reinigen der Innenwand des Rohres die Reinigungsvorrichtung und/oder das Rohr in einen Arbeitsraum der Laserbearbeitungsmaschine verfahren und die Reinigungsvorrichtung oder das Rohr oder beide relativ zueinander verfahren, so dass die Reinigungsvorrichtung in den Innenraum des Rohres eingeführt wird. Beispielsweise kann bei der Ausbildung einer einfachen Spannvorrichtung, welche lediglich zum Spannen des Rohres vorgesehen ist, die Reinigungsvorrichtung in das Innere des Rohres eingeführt werden. Bei der Ausbildung einer Spannvorrichtung als Durchschiebefutter kann die Reinigungsvorrichtung auch ortsfest positioniert sein, da durch das Durchschiebefutter ein Verfahren des Rohres entlang seiner Längsachse ermöglicht wird, so dass dieses bezüglich der Reinigungsvorrichtung positioniert wird. Alternativ kann auch eine Relativbewegung von dem Rohr und der Reinigungsvorrichtung vorgesehen sein.

Eine weitere vorteilhafte Ausführungsform des Verfahrens sieht vor, dass die Reinigungsvorrichtung während oder nach dem Einführen in das Rohr an die Innenseite des Rohres anliegend verfahren und anschließend während der Durchführung der Reinigung ortsfest zur Innenwand des Rohres positioniert gehalten wird. Beispielsweise wird die Reinigungsvorrichtung in das Rohrinnere eingeführt und dann in Abhängigkeit der Größe des Durchmessers des Rohres in eine Raumrichtung verfahren, so dass die Reinigungsvorrichtung an der Innenwand des Rohres für den anschließenden Reinigungsprozess anliegt. Durch das ortsfeste Positionieren der Reinigungsvorrichtung kann der Ablauf der Reinigung vereinfacht werden, da lediglich ein Rotieren des Rohres anzusteuern ist.

Bevorzugt ist die Reinigungsvorrichtung in Z-Richtung verfahrbar. Dadurch kann aufgrund einer einachsigen Verfahrbewegung eine einfache Anpassung an unterschiedliche Rohrquerschnitte der zu reinigenden Rohre ermöglicht sein. Alternativ kann die Reinigungsvorrichtung in Y-Richtung verfahrbar sein. Des Weiteren kann auch eine Verfahrbewegung in Z- und Y-Richtung - also in beide Verfahrrichtungen - rechtwinklig zur Rohrlängsachse erfolgen, welche der X-Richtung entspricht.

Eine alternative Ausführungsform des Verfahrens sieht vor, dass die Reinigungsvorrichtung und/oder das Rohr nur entlang der Rohrlängsachse zum Positionieren der Reinigungsvorrichtung in dem Rohr verfahren werden. Diese Ausführungsform ist bevorzugt dann gegeben, wenn als Reinigungsvorrichtung eine Rundbürste vorgesehen ist, deren Außendurchmesser gleich groß oder größer des Innendurchmessers des zu bearbeitenden Rohrs liegt und die Borsten der Rundbürste vollumfänglich nach dem Einführen in das Rohr an der Innenwand des Rohres anliegen.

Bei der ortsfesten Positionierung der Reinigungsvorrichtung zur Innenwand des Rohres während des Reinigungsprozesses kann gemäß einer ersten vorteilhaften Ausführungsform für die Durchführung der Reinigung vorgesehen sein, dass das Rohr rotierend angetrieben wird und die Reinigungsvorrichtung feststehend gehalten ist. Alternativ kann das Rohr und die Reinigungsvorrichtung rotierend angetrieben werden. Dies ermöglicht eine höhere Flexibilität in der Anpassung an die Reinigungsanforderungen als auch an die verwendeten Materialien für die Innenwand des Rohres und/oder beispielsweise der Borsten einer bürstenförmigen Reinigungsvorrichtung. Bevorzugt werden dabei das Rohr und die Reinigungsvorrichtung gegenläufig angetrieben. Des Weiteren kann alternativ das Rohr feststehend gehalten und die Reinigungsvorrichtung rotierend angetrieben werden. Dies ist insbesondere dann der Fall, wenn eine Rundbürste als Reinigungsvorrichtung vorgesehen ist, welche zumindest gleich groß oder geringfügig größer als ein Innendurchmesser der Rohrinnenumfangsfläche des Rohres ist, so dass die Reinigungsvorrichtung vollumfänglich an der Innenwand des Rohres angreift.

Eine weitere alternative Ausführungsform des Verfahrens sieht vor, dass die Reinigungsvorrichtung an die Innenwand des Rohres anliegend positioniert oder verfahren wird und während der Durchführung der Reinigung die Reinigungsvorrichtung entlang der Innenwand des Rohres verfahren wird. Bei einer solchen Verfahrensweise kann es erforderlich werden, dass die Reinigungsvorrichtung und/oder das Rohr ergänzend zur Bewegung in Z-Richtung auch in Y-Richtung bewegbar sind. Insbesondere bei nichtsymmetrischen Rohrquerschnitten eignet sich diese Verfahrensweise. Bevorzugt wird die Reinigungsvorrichtung rotierend angetrieben. Zusätzlich kann auch das Rohr rotierend angetrieben sein, wobei bevorzugt die Drehrichtung der Reinigungsvorrichtung und die Drehrichtung des Rohres gegenläufig sind.

Nach einer bevorzugten Ausführungsform des Verfahrens ist die Reinigungsvorrichtung als eine Reinigungsbürste mit einseitig ausgerichteten Borsten ausgebildet, welche während der Durchführung des Reinigungsschrittes in eine Richtung stillstehend zum Rohr ausgerichtet gehalten wird.

Eine alternative Ausführungsform der Reinigungsvorrichtung sieht vor, dass diese als Rundbürste ausgebildet ist. Während des Reinigungsschrittes kann die Rundbürste sowohl stillstehend gehalten, schrittweise getaktet, rotierend als auch in oder gegensinnig zur Drehrichtung des Rohres rotierend angetrieben werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht von Teilen einer Laserbearbeitungsmaschine während einer Rohrbearbeitung,
Figur 2 eine schematische Ansicht der Laserbearbeitungsmaschine gemäß Figur 1 bei einem letzten Trennschnitt,
Figuren 3a und 3b schematische Ansichten einer ersten und einer abgewandelten Ausführungsform zur Durchführung eines Reinigungsschrittes an einer Innenwand eines Rohres,
Figur 4 eine alternative Ausführungsform des Reinigungsschrittes zu Figur 3a,
Figur 5 eine erste weitere alternative Ausführungsform des Reinigungsschrittes zu Figur 3a,
Figur 6 eine zweite weitere alternative Ausführungsform des Reinigungsschrittes zu Figur 3a, und
Figuren 7a und 7b schematische Ansichten eines Reinigungsschrittes für ein Rohr mit einem alternativen Rohrquerschnitt.

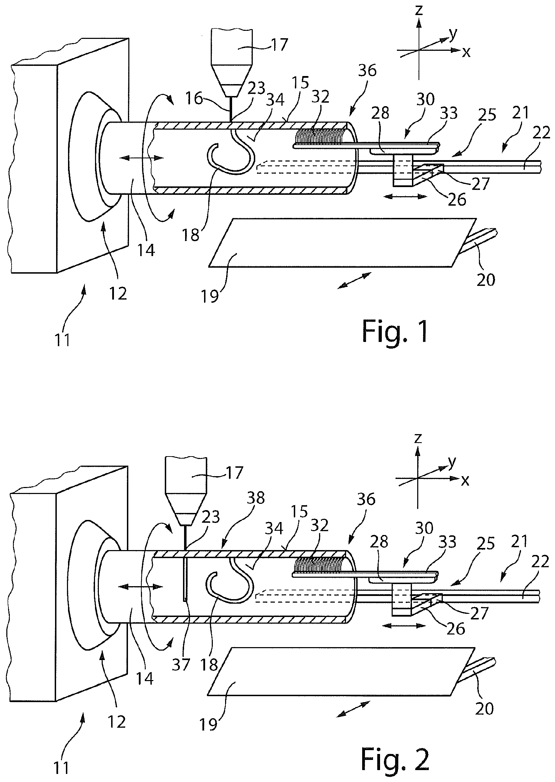

In Figur 1 ist schematisch in Teilen eine an sich bekannte und daher nur teils beschriebene Laserbearbeitungsmaschine 11, insbesondere Laserschneidanlage, ersichtlich, welche eine Spannvorrichtung 12 zur Halterung eines zu bearbeitenden Rohres 14 umfasst. Diese Spannvorrichtung 12 kann sowohl als reines Spannfutter als auch in Form eines Durchschiebefutters ausgebildet sein, durch welches das Rohr 14 in X-Richtung verfahrbar ist. Das Rohr 14 wird durch die Spannvorrichtung 12 drehbar gehalten, damit dieses um seine Rohrlängsachse, die in X-Richtung ausgerichtet ist, rotiert und eine Außenumfangsfläche 15 des Rohres 14 mit einem Laserstrahl 16 bearbeitet werden kann. Aus einem Bearbeitungskopf 17 der Laserbearbeitungsmaschine 11 tritt der Laserstrahl 16 aus und wird auf die Außenumfangsfläche 15 des Rohres 14 fokussiert. Der Bearbeitungskopf 17 ist in X-, Y- und/oder in Z-Richtung relativ zur Außenumfangsfläche 15 des Rohres 14 positionierbar. Durch den Laserstrahl 16 können in das Rohr 14 Konturschnitte 18 eingebracht werden, wie beispielsweise Löcher, Ausnehmungen oder Einschnitte.

In Figur 2 wird nach dem Bearbeiten des Rohrs 14 mit einem oder mehreren Konturschnitten 18 ein Trennschnitt 37 eingebracht, um ein Rohrabschnitt 38 von dem Rohr 14 abzutrennen. Der abgetrennte Rohrabschnitt 38 kann ein Werkstück bilden, welches fertig bearbeitet ist oder noch weiteren Bearbeitungsprozessen zugeführt werden kann.

Die Laserbearbeitungsmaschine 11 kann des Weiteren zumindest eine Ausschleusfläche 19 aufweisen, die seitlich und/oder unterhalb des durch die Spannvorrichtung 12 gehaltenen Rohrs 14 positioniert ist. Die Ausschleusfläche 19 ist an einem nicht näher dargestellten Maschinengrundgestell der Laserbearbeitungsmaschine 11 über Halteelemente 20 aufgenommen. Die Ausschleusfläche 19 oder Ausschleusflächen 19 können zumindest in Y-Richtung verfahrbar angesteuert werden, so dass die herabfallenden Werkstücke nach unten definiert aus einem Arbeitsraum ausgeschleust werden können. In dem Arbeitsraum ist das zu bearbeitende Rohr 14 angeordnet und wird durch den Laserstrahl 16 bearbeitet.

Bei der Laserbearbeitungsmaschine 11 gemäß Figur 1 kann des Weiteren eine Führungsschiene 22 vorgesehen sein, welche eine nicht näher dargestellte Fertigteilunterstützung aufnimmt. Die Fertigteilunterstützung ermöglicht, dass bei insbesondere langen rohrförmigen Werkstücken das entfernt zum Bearbeitungskopf 17 und einer Bearbeitungsstelle 23 liegende Ende des Rohres 14 unterstützt aufgenommen wird. An dieser Führungsschiene 22 kann zusätzlich oder alternativ eine Anbauvorrichtung 25 vorgesehen sein. Diese Anbauvorrichtung 25 umfasst zumindest einen Aufnahmeadapter 26, der an einer Montageplatte 27 montiert ist, durch welche der Aufnahmeadapter 26 an der Führungsschiene 22 angreift und entlang der X-Richtung verfahrbar aufgenommen ist. Die Anbauvorrichtung 25 kann durch nicht näher dargestellte Antriebselemente zumindest in X-Richtung verfahrbar durch eine Steuerung der Laserbearbeitungsmaschine 11 angesteuert werden. Der Aufnahmeadapter 26 weist des Weiteren ein Anschlusselement 28 auf, an welchem lösbar und insbesondere austauschbar eine Reinigungsvorrichtung 30 befestigt ist. Der Aufnahmeadapter 26 kann des Weiteren eine Verstelleinrichtung aufweisen, durch welche das Anschlusselement 28 in Y- und/oder Z-Richtung verfahrbar ist und insbesondere motorisch verfahrbar angesteuert werden kann.

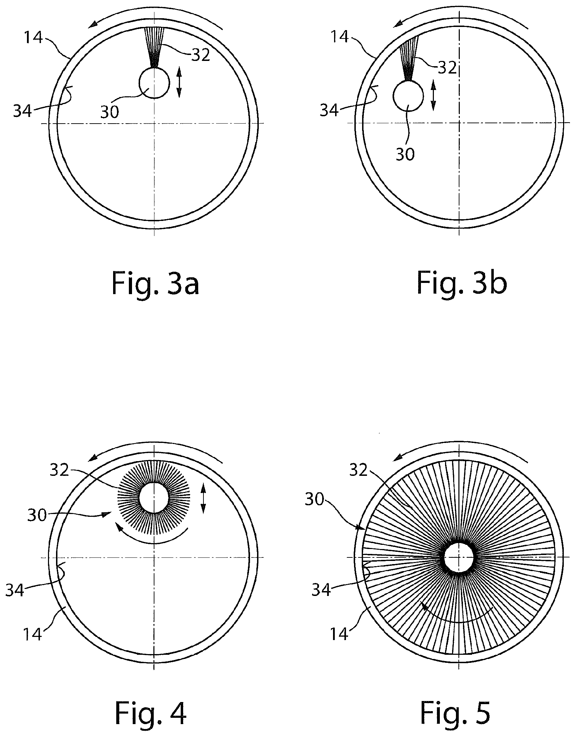

Eine erste Ausführungsform der Reinigungsvorrichtung 30 ist in Figur 1 dargestellt, welche als eine Bürste mit einseitig ausgerichteten Borsten 32 an einem Stil 33 ausgebildet ist, wobei der Stil 33 an dem Anschlusselement 28 befestigbar ist. Alternativ kann die Reinigungsvorrichtung 30 als eine sogenannte Rundbürste ausgebildet sein, wie diese schematisch beispielsweise in Figur 3 dargestellt ist.

Die Borsten 32 der Reinigungsvorrichtung 30 sind bevorzugt aus Kunststoff ausgebildet. Alternativ können auch metallische Werkstoffe oder eine Kombination hiervon zur Herstellung der Borsten eingesetzt werden.

In einem nicht näher dargestellten Ausführungsbeispiel weist das Anschlusselement 28 einen Motor auf, der über eine Steuerung der Laserbearbeitungsmaschine 11 ansteuerbar ist, wodurch eine als Rundbürste ausgebildete Reinigungsvorrichtung in eine der beiden möglichen Drehrichtungen drehbar angesteuert werden kann.

Durch das Einbinden der Reinigungsvorrichtung 30 in die Laserbearbeitungsmaschine 11 ist ein automatisierter Reinigungsschritt zum Reinigen einer Innenwand 34 eines Rohres 14 ermöglicht. Nach dem Einbringen eines letzten Konturschnittes 18 beziehungsweise vor dem Einbringen eines letzten Trennschnittes 37 zum vollständigen Abtrennen eines Rohrabschnitts 38 von dem Rohr 14 zur Bildung eines Werkstückes (Figur 2) wird der Reinigungsschritt durchgeführt. Dabei wird die Reinigungsvorrichtung 30 zu einer Innenwand 34 des Rohres 14, insbesondere des abzutrennenden Rohrabschnitts 38 ausgerichtet, um zumindest den Bereich der Innenwand 34 zu reinigen, welcher zwischen dem freien Rohrende 36 und dem geplante Trennschnitt 37 verbleibt. Nach dem Reinigen der Innenwand 34 des Rohres 14 wird die Reinigungsvorrichtung 30 vorzugsweise vollständig aus dem Innenraum des Rohres 14 herausgeführt und anschließend der Trennschnitt 37 eingebracht, um das Werkstück von dem Rohr 14 abzutrennen. Der Trennschnitt 37 kann durch eine volle Umdrehung des Rohres 14 um 360° erfolgen. Sofern bereits Konturschnitte 18 Bereiche des Trennschnitts 37 bilden, kann der Umfang der Drehung des Rohres 14 reduziert sein.

Bei sehr langen Rohren 14 und/oder zur Erzielung kurzer Bearbeitungszyklen kann die Innenwand 34 des Rohrs 14 parallel zur Einbringung von Konturschnitten 18 mit der Reinigungsvorrichtung 30 gereinigt werden. Gemäß einer alternativen Ausführungsform der Erfindung wird die Reinigungsvorrichtung 30 mit Abstand zum Konturschnitt 18 geführt, so dass ein Auftreffen des Laserstrahls 16 auf der Reinigungsvorrichtung 30 verhindert ist.

Bei einer sehr hohen Sauberkeitsanforderung können vor dem Reinigungsschritt am Ort des geplanten Trennschnitts 37 bereits ein oder mehrere Konturschnitte 18 durchgeführt werden, sodass der Trennschnitt 37 nicht den gesamten Rohrumfang umfasst, sondern nur die verbleibenden Stege durchtrennt werden müssen. Besonders vorteilhaft für den Erhalt der notwendigen Stabilität des Rohrabschnitts 38 zum Rohr 14 ist, wenn die haltenden Stege gleichmäßig über den Umfang des Rohres 14 verteilt sind. Je nach Rohrdurchmesser und Materialstärke kann die verbleibende Strecke der Summe der Stege weniger als 50%, insbesondere weniger als 10% des Rohrumfangs betragen.

In speziellen Anwendungsfällen kann es gewünscht sein, dass die Außenseite des Werkstücks aus ästhetischen oder funktionalen Gründen nur wenige, insbesondere keine, Kratzer aufweist. Dazu kann die Reinigungsvorrichtung 30 nach dem Reinigungsschritt nur aus dem Bereich des Trennschnitts 37 entfernt werden, sodass die Reinigungsvorrichtung 30 während des Trennschnitts 37 zumindest teilweise im Rohr 14 verbleibt. Das abgetrennte Werkstück fällt dadurch nicht nach unten weg, sondern wird von der Reinigungsvorrichtung 30 aufgefangen und gehalten. Die Reinigungsvorrichtung 30 und/oder z.B. das Ausschleuselement 19 können dann so verfahren, dass das Werkstück auf einer Ablagefläche oder dem Ausschleuselement 19 abgelegt wird, ohne das die äußere Oberfläche des Werkstücks verkratzt wird. Danach kann die Reinigungsvorrichtung 30 aus dem Werkstück hinausgeführt werden.

Zur Durchführung des Reinigungsschrittes sind mehrere Verfahrensabläufe möglich, die nachfolgend anhand der Figuren 3 bis 7 im Einzelnen beschrieben werden.

Eine erste Ausführungsform des Verfahrens zur Durchführung eines Reinigungsschrittes ist schematisch in Figur 3a dargestellt. Die Reinigungsvorrichtung 30 und/oder das Rohr 14, welches beispielsweise einen kreisrunden Querschnitt aufweist, werden derart zueinander verfahren, dass die Reinigungsvorrichtung 30 im Innenraum des Rohres 14 in einer Eintauchposition positioniert wird. In dieser Eintauchposition kann die Reinigungsvorrichtung 30 beispielsweise in der X-Achse zum Rohr 14 positioniert sein. Alternativ kann auch eine weitere Eintauchposition gegeben sein, bei welcher die Reinigungsvorrichtung in Y- und/oder Z-Richtung verfahren ist. In der Eintauchposition greift die Reinigungsvorrichtung 30 zumindest teilweise in das Rohr 14, so dass die Reinigungsvorrichtung 30 an das Rohrende 36 angrenzend positioniert wird. Alternativ kann die Reinigungsvorrichtung 30 derart innerhalb des Rohres 14 in der Eintauchposition positioniert werden, dass die Reinigungsvorrichtung 30 zumindest im Bereich des letzten Trennschnittes 37 oder an den letzten Trennschnitt 37 angrenzend positioniert ist. Anschließend erfolgt eine Verfahrbewegung in Z-Richtung, bis die Reinigungsvorrichtung 30 an der Innenwand 34 des Rohres 14 anliegt. Bei dieser Ausführungsform ist die Reinigungsvorrichtung 30 mittig zum Rohr 14, insbesondere in der Z-Achse des Rohres 14 und an diesen anliegend, positioniert. Während des Reinigungsschrittes bleibt die Reinigungsvorrichtung 30 ortsfest in seiner Position zum Rohr 14. Darauf folgend wird das Rohr 14 durch die Spannvorrichtung 12 in eine Drehrichtung drehbar angetrieben. Dadurch wird bei der ortsfest gehaltenen Reinigungsvorrichtung 30 die innere Umfangsfläche des Rohres 14 bezüglich der Länge der Reinigungsvorrichtung 30 gereinigt. Eine Verfahrbewegung entlang der Rohrlängsachse ist dann entbehrlich, wenn die Länge der Reinigungsvorrichtung 30 gleich oder größer der Länge des herzustellenden Werkstücks ist. Sofern das Werkstück länger als die Reinigungsvorrichtung 30 ist, welche an der Innenwand 34 des Rohres 14 angreift, erfolgt zusätzlich zur Drehung des Rohres 14 eine Verfahrbewegung entlang der X-Achse durch die Reinigungsvorrichtung 30. Diese kann sowohl am freien Rohrende 36 zur Trennstelle hin als auch von der Trennstelle ausgehend zum freien Rohrende 36 hin erfolgen. Alternativ kann, sofern die Spannvorrichtung als Durchschiebefutter vorgesehen ist, nur das Rohr 14 verfahren oder eine Relativbewegung zwischen dem Rohr 14 und der Reinigungsvorrichtung 30 angesteuert werden, um die gesamte Länge der Innenwand ebenso zu reinigen. Alternativ kann auch eine schrittweise Zunahme in der Eintauchbewegung der Reinigungsvorrichtung 30 zum Rohr 14 vorgesehen sein. Ebenso kann eine Art Zick-Zack-Bewegung vorgesehen sein, so dass bei mehreren Umdrehungen ebenso eine vollständige Abarbeitung der Innenumfangsfläche der Innenwand 34 des Rohres 14 ermöglicht ist.

Bei dieser Ausführungsform kann die Reinigungsvorrichtung 30 als eine Bürste mit einseitig ausgerichteten Borsten 32 ausgebildet sein. Ebenso kann die Reinigungsvorrichtung 30 als Rundbürste ausgebildet werden. Bei der Ausführungsform gemäß Figur 3a kann eine als Rundbürste ausgebildete Reinigungsvorrichtung 30 beispielsweise stillstehend gehalten oder auch rotierend angetrieben werden. Eine solche Rundbürste ist bevorzugt im Umfang kleiner als der zu reinigende Rohrdurchmesser ausgebildet. Bevorzugt füllt die Rundbürste 80 % oder weniger des Innenvolumens des zu reinigenden Rohres aus.

In Figur 3b ist eine alternative Ausführungsform des Verfahrens zu Figur 3a dargestellt. Sofern beispielsweise die Reinigungsvorrichtung 30 außermittig, insbesondere außerhalb der Rohrlängsachse, zum Rohr 14 in das Rohr 14 eingeführt wird, genügt ebenfalls beispielsweise eine Höhenverstellung in der Z-Richtung, um die Reinigungsvorrichtung 30 an der Innenwand 34 des Rohres 14 zur Anlage zu bringen. Alle weiteren vorbeschriebenen Verfahrensschritte und Alternativen zu Figur 2a gelten auch für diese Ausführungsform gemäß Figur 2b.

In Figur 4 ist eine modifizierte Ausführungsform des Reinigungsschrittes zu Figur 3a dargestellt. Bei dieser Ausführungsform gemäß Figur 4 ist die Reinigungsvorrichtung 30 als Rundbürste ausgebildet. Diese ist ebenfalls mittig beziehungsweise in der Z-Achse zum Rohr 14 positioniert. Während dem Reinigungsschritt ist die Reinigungsvorrichtung 30 wiederum ortsfest relativ zum Rohr 14. Bei dieser Ausführungsform wird die Reinigungsvorrichtung 30 ebenso wie das Rohr 14 rotierend angetrieben. Vorzugsweise ist die Reinigungsvorrichtung 30 gegenläufig zum Rohr 14 angetrieben. Im Übrigen gelten die Ausführungen zu Figur 3a.

In Figur 5 ist eine weitere alternative Ausführungsform zur Durchführung des Reinigungsschrittes dargestellt. Bei dieser Ausführungsform ist die Reinigungsvorrichtung 30 als Rundbürste ausgebildet und füllt den Innenraum des zu reinigenden Rohres 14 vollständig aus. Zur Durchführung des Reinigungsschrittes erfolgt lediglich eine Verfahrbewegung entlang der X-Richtung, insbesondere entlang der Längsachse des Rohres 14, um die Reinigungsvorrichtung 30 innerhalb des Rohres 14 zu positionieren. Die Reinigungsvorrichtung 30 wird wiederum ortsfest in der Position zum Rohr 14 gehalten. Zur Durchführung der Reinigung kann vorgesehen sein, dass die Reinigungsvorrichtung 30 stillstehend gehalten und das Rohr 14 drehbar angetrieben wird. Alternativ kann die Reinigungsvorrichtung 30 drehbar angetrieben und das Rohr 14 stillstehend gehalten werden. Alternativ kann sowohl die Reinigungsvorrichtung 30 als auch das Rohr 14 drehbar angetrieben sein, wobei vorzugsweise eine gegenläufige Drehrichtung angesteuert wird.

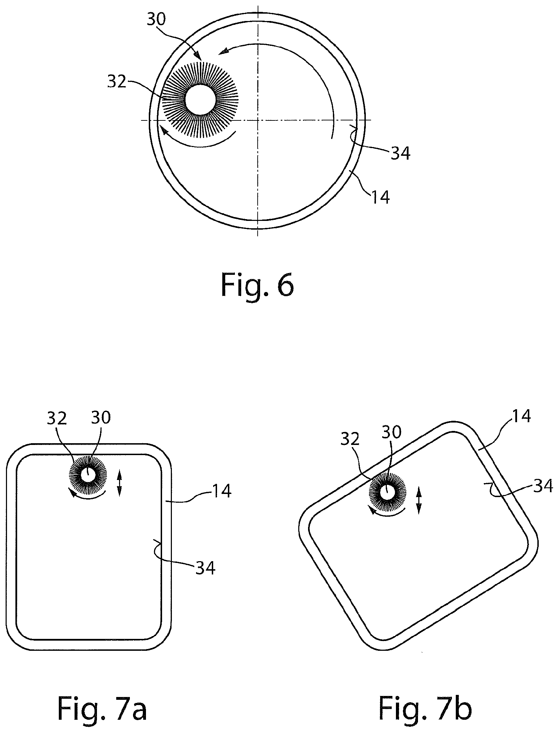

In Figur 6 ist eine weitere alternative Ausführungsform zur Durchführung des Reinigungsschrittes dargestellt. Bei dieser Ausführungsform wird die Reinigungsvorrichtung 30 entlang der Innenwand 34 des Rohres 14 verfahren. Dies kann sowohl im Uhrzeigersinn als auch gegen den Uhrzeigersinn erfolgen. Hierzu erfolgt eine Verfahrbewegung der Reinigungsvorrichtung 30 in Y- und Z-Richtung. Bevorzugt ist die Reinigungsvorrichtung 30 als Rundbürste ausgebildet, welche rotierend angetrieben ist. Diese kann bei stillstehendem Rohr 14 entlang der Rohrinnenseite umläufig verfahren werden. Bevorzugt wird das Rohr 14 rotierend angetrieben und insbesondere gegenläufig zur Rotationsbewegung der Reinigungsvorrichtung 30 angetrieben.

In den Figuren 7a und 7b ist eine weitere alternative Ausführungsform zu Durchführung des Reinigungsschrittes dargestellt. Bei dieser Ausführungsform wird anstelle eines Rohres 14 mit einem kreisrunden Querschnitt, beispielsweise ein Rohr 14 mit einem rechteckförmigen Querschnitt, gereinigt. Dabei ist die Reinigungsvorrichtung 30 als rotierende Bürste ausgebildet, welche in Abhängigkeit der Drehposition der Spannfuttervorrichtung 12 in und entgegen der Z-Richtung verfahren wird. Dadurch kann die Reinigungsvorrichtung 30 der Innenumfangswand des rechteckförmigen Querschnitts des Rohres 14 folgen. Die Verfahrbewegung der Reinigungsvorrichtung 30 in Z-Richtung kann geregelt oder auch selbsttätig (z.B. Feder) erfolgen. Für eine geregelte Bewegung kann die Form und Größe des Rohres 14 vor und/oder während der Reinigung von einer an der Bearbeitungsmaschine 11 vorgesehenen Sensorik erfasst oder durch den Bediener eingegeben werden.

## Patentansprüche

1. Verfahren zum Reinigen einer Innenwand (34) eines Rohres (14), welches von einer Spannvorrichtung (12) einer Laserbearbeitungsmaschine (11) aufgenommen und mit einem Laserstrahl (16) bearbeitet wird, wobei vor einem letzten Trennschnitt zum vollständigen Abtrennen eines Rohrabschnitts (38) von dem durch die Spannvorrichtung (12) gehaltenen Rohr (14) mindestens ein Konturschnitt (18) in das Rohr (14) eingebracht wird und ein Reinigungsschritt durchgeführt wird, bei dem zumindest die Innenwand (34) des Rohres (14) vom freien Rohrende (36) bis zum einzubringenden Trennschnitt (37) zur Bildung eines Werkstücks mit einer Reinigungsvorrichtung (30) gereinigt wird, **dadurch gekennzeichnet, dass** der Reinigungsschritt nach der Einbringung des letzten Konturschnitts (18) durchgeführt wird oder der Reinigungsschritt parallel zur Einbringung des mindestens einen Konturschnitts (18) so durchgeführt wird, dass die Reinigungsvorrichtung (30) mit Abstand zum Konturschnitt (18) geführt wird, sodass ein Auftreffen des Laserstrahls (16) auf der Reinigungsvorrichtung (30) verhindert ist.

2. Verfahren nach Anspruch 1, **dadurch gekennzeichnet, dass** während des Reinigungsschrittes ein Bereich der Innenwand (34) des Rohres (14) gereinigt wird, der sich vom freien Rohrende (36) aus über den Trennschnitt (37) hinaus in das Rohr (14) erstreckt.

3. Verfahren nach Anspruch 1 oder 2, **dadurch gekennzeichnet, dass** die Reinigungsvorrichtung (30) vor dem Einbringen des Trennschnitts (37) zumindest aus dem Bereich des Trennschnitts (37) oder vollständig aus dem Rohr (14) herausgeführt wird.

4. Verfahren nach einem der vorhergehenden Ansprüche, **dadurch gekennzeichnet, dass** zum Reinigen der Innenwand (34) des Rohres (14) die Reinigungsvorrichtung (30) und/oder das Rohr (14) oder beides verfahren werden, so dass die Reinigungsvorrichtung (30) in den Innenraum des Rohres (14) eingeführt wird.

5. Verfahren nach Anspruch 4, **dadurch gekennzeichnet, dass** die Reinigungsvorrichtung (30) an die Innenwand (34) des Rohres (14) anliegend verfahren wird und anschließend während der Durchführung der Reinigung ortsfest zum Rohr (14) positioniert gehalten wird.

6. Verfahren nach Anspruch 4, **dadurch gekennzeichnet, dass** die Reinigungsvorrichtung (30) in mindestens einer Querrichtung zur Rohrlängsachse (Z-Richtung, Y-Richtung) an der Innenwand (34) des Rohres (14) verfahren wird.

7. Verfahren nach Anspruch 4, **dadurch gekennzeichnet, dass** die Reinigungsvorrichtung (30) und/oder das Rohr (14) oder beides nur entlang der Rohrlängsachse des Rohrs (14) zum Einführen der Reinigungsvorrichtung (30) in den Innenraum des Rohres (14) verfahren wird.

8. Verfahren nach Anspruch 4, **dadurch gekennzeichnet, dass** die Reinigungsvorrichtung (30) an die Innenwand (34) des Rohres (14) anliegend verfahren wird und während der Durchführung der Reinigung die Reinigungsvorrichtung (30) entlang der Innenumfangsfläche der Innenwand (34) des Rohres (14) verfahren wird.

9. Verfahren nach einem der Ansprüche 4 bis 8, **dadurch gekennzeichnet, dass** das Rohr (14) rotierend angetrieben und die Reinigungsvorrichtung (30) feststehend gehalten wird oder das Rohr (14) rotierend angetrieben wird und die Reinigungsvorrichtung (30) rotierend angetrieben wird oder dass das Rohr (14) feststehend gehalten und die Reinigungsvorrichtung (30) rotierend angetrieben wird.

10. Verfahren nach Anspruch 1, **dadurch gekennzeichnet, dass** die Reinigungsvorrichtung (30) als eine Reinigungsbürste mit einseitig ausgerichteten Borsten (32) ausgebildet ist und während der Durchführung des Reinigungsschrittes in eine Richtung ausgerichtet zur Innenwand (34) des Rohres (14) gehalten wird.

11. Verfahren nach Anspruch 1, **dadurch gekennzeichnet, dass** die Reinigungsvorrichtung (30) als Rundbürste ausgebildet ist und während des Reinigungsschrittes stillstehend gehalten, schrittweise getaktet oder rotierend angetrieben wird.

12. Verfahren nach einem der vorhergehenden Ansprüche, **dadurch gekennzeichnet, dass** vor dem Reinigungsschritt mindestens ein Konturschnitt am Ort des letzten Trennschnitts (37) im Rohr (14) eingebracht wird, sodass der Trennschnitt (37) nicht den gesamten Rohrumfang umfasst.

## Claims

1. A method for cleaning an inner wall (34) of a tube (14) which is received by a clamping device (12) of a laser processing machine (11) and processed by a laser beam (16), with at least one contour cut (18) being introduced into the tube (14) prior to an ultimate separation cut for accomplishing the separation of a tube section (38) from the tube (14) held by said clamping device (12), and with a cleaning step being performed in the course of which at least the inner wall (34) of the tube (14), beginning from the free tube end (36) and extending to the location where the separation cut (37) is to be introduced for forming a workpiece, is being cleaned using a cleaning device (30), **characterised in that** the cleaning step is effected after the final contour cut (18) has been accomplished, or **in that** the cleaning step is effected concurrently with the accomplishment of the at least one contour cut (18), in such a manner that the cleaning device (30) is moved at a given distance from the contour cut (18) such that the laser beam (16) is prevented from impinging on the cleaning device (30).

2. The method as claimed in claim 1, **characterised in that** an area of the inner wall (34) of the tube (14) beginning from the free tube end (36) and extending into the tube (14) to a location beyond the separation cut (37) is being cleaned during the cleaning step.

3. The method as claimed in claim 1 or 2, **characterised in that** prior to introducing the separation cut (37), the cleaning device (30) is removed at least from the separation cut (37) area, or is entirely removed from the tube (14).

4. The method as claimed in any of the preceding claims, **characterised in that** for cleaning the inner wall (34) of the tube (14), the cleaning device (30) and/or the tube (14), or both of them, are moved in such a manner that the cleaning device (30) is inserted into the inner space of the tube (14).

5. The method as claimed in claim 4, **characterised in that** the cleaning device (30) is displaced so as to be in abutment with the inner wall (34) of the tube (14) and is then maintained stationary with respect to said tube (14) while the cleaning operation is being performed.

6. The method as claimed in claim 4, **characterised in that** the cleaning device (30) is moved along the inner wall (34) of the tube (14) in at least one transverse direction (Z direction, Y direction) with respect to the tube longitudinal direction.

7. The method as claimed in claim 4, **characterised in that** for inserting the cleaning device (30) into the inner space of the tube (14), the cleaning device (30) and/or the tube (14), or both of them, are moved exclusively along the longitudinal axis of said tube (14).

8. The method as claimed in claim 4, **characterised in that** the cleaning device (30) is displaced so as to be in abutment with the inner wall (34) of the tube (14), and **in that** the cleaning device (30) is moved along the inner circumferential surface of the inner wall (34) of the tube (14) while the cleaning operation is being performed.

9. The method as claimed in any one of claims 4 to 8, **characterised in that** the tube (14) is rotatorily driven and the cleaning device (30) is maintained stationary, or **in that** the tube (14) is rotatorily driven and the cleaning device (30) is rotatorily driven, or **in that** the tube (14) is maintained stationary and the cleaning device (30) is rotatorily driven.

10. The method as claimed in claim 1, **characterised in that** the cleaning device (30) is realised in the form of a cleaning brush having bristles (32) oriented in only one direction, and **in that** it is maintained in a given orientation with respect to the inner wall (34) of the tube (14) while the cleaning step is being performed.

11. The method as claimed in claim 1, **characterised in that** the cleaning device (30) is realised in the form of a circular brush, and **in that** it is maintained stationary, operated step by step in a cycled manner, or rotatorily driven while the cleaning step is being performed.

12. The method as claimed in any of the preceding claims, **characterised in that** prior to the cleaning step, at least one contour cut is introduced into the tube (14) at the location of the ultimate separation cut (37), such that the separation cut (37) will not comprise the entire tube circumference.

## Revendications

1. Procédé destiné à nettoyer une paroi intérieure (34) d'un tube (14) qui est reçu par un dispositif de serrage (12) d'une machine d'usinage au laser (11) et qui est usiné grâce à un rayon laser (16), au moins une coupe de contour (18) étant réalisée dans le tube (14) avant une dernière coupe de séparation destinée à séparer complètement une partie de tube (38) du tube (14) maintenu par le dispositif de serrage (12), et une étape de nettoyage étant effectuée lors de laquelle au moins la paroi intérieure (34) du tube (14) est nettoyée grâce à un dispositif de nettoyage (30), et ce depuis l'extrémité libre (36) dudit tube jusqu'à l'endroit où doit être réalisée la coupe de séparation (37) en vue de former une pièce, **caractérisé en ce que** l'étape de nettoyage est effectuée après la réalisation de la dernière coupe de contour (18) ou **en ce que** l'étape de nettoyage est effectuée parallèlement à la réalisation de ladite au moins une coupe de contour (18), et ce de manière telle que le dispositif de nettoyage (30) est déplacé avec une distance donnée par rapport à la coupe de contour (18) afin d'empêcher le rayon laser (16) de venir heurter le dispositif de nettoyage (30).

2. Procédé selon la revendication 1, **caractérisé en ce que** pendant l'étape de nettoyage, une zone de la paroi intérieure (34) du tube (14) qui s'entend dans le tube (14) depuis l'extrémité libre (36) dudit tube jusqu'à au-delà de l'endroit de la coupe de séparation (37) est nettoyée.

3. Procédé selon la revendication 1 ou 2, **caractérisé en ce que**, avant la réalisation de la coupe de séparation (37), le dispositif de nettoyage (30) est sorti au moins de la zone de la coupe de séparation (37) ou est sorti complètement du tube (14).

4. Procédé selon l'une quelconque des revendications précédentes, **caractérisé en ce que**, pour nettoyer la paroi intérieure (34) du tube (14), le dispositif de nettoyage (30) et/ou le tube (14) ou les deux sont déplacés de manière telle que le dispositif de nettoyage (30) pénètre dans l'espace intérieur du tube (14).

5. Procédé selon la revendication 4, **caractérisé en ce que** le dispositif de nettoyage (30) est déplacé de manière contiguë à la paroi intérieure (34) du tube (14) et est ensuite, pendant la réalisation de l'opération de nettoyage, maintenu positionné de manière fixe par rapport audit tube (14).

6. Procédé selon la revendication 4, **caractérisé en ce que** le dispositif de nettoyage (30) est déplacé le long de la paroi intérieure (34) du tube (14) dans au moins un sens transversal (en direction z, en direction y) par rapport à l'axe longitudinal dudit tube.

7. Procédé selon la revendication 4, **caractérisé en ce que** le dispositif de nettoyage (30) et/ou le tube (14) ou les deux sont déplacés uniquement le long de l'axe longitudinal du tube (14) en vue d'insérer le dispositif de nettoyage (30) dans l'espace intérieur du tube (14).

8. Procédé selon la revendication 4, **caractérisé en ce que** le dispositif de nettoyage (30) est déplacé de manière contiguë à la paroi intérieure (34) du tube (14) et **en ce que**, pendant la réalisation de l'opération de nettoyage, le dispositif de nettoyage (30) est déplacé le long de la surface circonférentielle intérieure de la paroi intérieure (34) du tube (14).

9. Procédé selon l'une quelconque des revendications 4 à 8, **caractérisé en ce que** le tube (14) est entraîné de manière rotative et le dispositif de nettoyage (30) est maintenu de manière fixe, ou **en ce que** le tube (14) est entraîné de manière rotative et le dispositif de nettoyage (30) est entraîné de manière rotative, ou **en ce que** le tube (14) est maintenu de manière fixe et le dispositif de nettoyage (30) est entraîné de manière rotative.

10. Procédé selon la revendication 1, **caractérisé en ce que** le dispositif de nettoyage (30) est réalisé en tant que brosse de nettoyage pourvue de poils (32) orientés d'un seul côté, et est maintenu, pendant la réalisation de l'étape de nettoyage, dans une direction orientée vers la paroi intérieure (34) du tube (14).

11. Procédé selon la revendication 1, **caractérisé en ce que** le dispositif de nettoyage (30) est réalisé en tant que brosse circulaire et, pendant l'étape de nettoyage, est maintenu de manière immobile, est entraîné de manière cadencée pas à pas ou est entraîné de manière rotative.

12. Procédé selon l'une quelconque des revendications précédentes, **caractérisé en ce que**, avant l'étape de nettoyage, au moins une coupe de contour est réalisée dans le tube (14) à l'endroit de la dernière coupe de séparation (37) de sorte que la coupe de séparation (37) ne comprend pas toute la circonférence dudit tube.
